# EUROPEAN PATENT SPECIFICATION

(11) **EP 2 125 509 B1**
(45) Date of publication and mention of the grant of the patent: **04.03.2015**
(21) Application number: 08701572.3
(22) Date of filing: 18.01.2008
(51) Int. Cl.: B64C 1/00

(54) **FUSELAGE OF AN AIRCRAFT OR SPACECRAFT OF CRP/METAL HYBRID CONSTRUCTION WITH A METAL FRAMEWORK**
RUMPF EINES LUFT- ODER RAUMFAHRZEUGS IN CFK-METALL-HYBRIDBAUWEISE MIT EINEM METALLRAHMEN
FUSELAGE D'AÉRONEF OU DE VÉHICULE SPATIAL À CONSTRUCTION HYBRIDE PRFC/MÉTAL COMPRENANT UNE OSSATURE MÉTALLIQUE

(30) Priority: 23.01.2007 DE 102007003277; 23.01.2007 US 897124 P
(43) Date of publication of application: 02.12.2009
(73) Proprietor: Airbus Operations GmbH, 21129 Hamburg (DE)
(72) Inventor: KOLAX, Michael, 21147 Hamburg (DE); DOLZINSKI, Wolf-Dietrich, 27777 Ganderkesee (DE); WENTZEL, Hans-Peter, 27305 Bruchhausen-Vilsen (DE); HERRMANN, Ralf, 27777 Ganderkesee (DE)
(74) Representative: Isarpatent
(86) International application number: PCT/EP2008/050560
(87) International publication number: WO 2008/090089

(56) References cited:
- GB-A- 531 357
- US-A- 4 674 712
- US-A1- 2006 214 057

## Description

The present invention relates to an aircraft fuselage of CRP/metal hybrid construction, wherein the aircraft fuselage is provided with a metal frame.

Aircraft fuselages composed of metal panelling are generally known from the prior art. However, they have the drawback that the metal fuselages have a relatively high weight.

Conversely, an aircraft fuselage of conventional, monolithic CRP construction can save considerable weight compared to a metal fuselage. However, the CRP construction almost completely loses this advantage if the required ability to shield electromagnetic interference (EMI) and the preconditions for installation of electrical systems are to be implemented. By contrast, a metal fuselage automatically brings with it such ability to shield electromagnetic interference.

In the most recent developments, it has been attempted to counteract this shortcoming by the use of metal frame elements. However, the tight spacing of the frame elements of approx. 533 mm reduces the weight gain. Yet the weight saving is very much one of the main reasons to use CRP materials.

In the case of a CRP/metal hybrid design, furthermore, special measures have to be taken to protect against galvanic corrosion or contact corrosion. In the case of galvanic corrosion, different galvanic potentials between a CRP component and a metal component, in conjunction with an electrolyte, such as water of condensation, lead to corrosion. Therefore, suitable measures have to be taken in order to isolate the CRP components and metal components from one another in such a way that they do not come into direct contact with one another. For this purpose, for example, separating layers, such as glass fibre mats or Tedlar films, are placed between the CRP components and metal components, and furthermore suitable connecting means, for example sheathed by a GRP material, are used. Furthermore, the protective measures have to be regularly checked. Consequently, the protection of metal frame elements which are secured to a panelling made from a CRP material requires expensive and weight-relevant remedial measures to prevent galvanic corrosion.

US patent application 4 674 712 A describes a subsonic airplane designed with all structural elements fabricated from composite material and comprising a wide-body fuselage, having a fore-body flight crew station and cockpit, a center body section having two horizontally adjacent lobes and an aft-body section.

British patent application GB 531 357 A describes a circular or elliptical fuselage, wherein a supporting structure of the fuselage is such, that it coincides with the space dividing partitions or walls. In the fuselage, the walls which partition the longitudinal gangway off from the lateral spaces, are at the same time longitudinal girders.

US Patent Application 2006/214057 A1 describes an aircraft fuselage has on its periphery a double skin, an outer skin and an inner skin. Inside the fuselage is a main deck, separating the interior space of the fuselage longitudinally into two spaces.

Therefore, the present invention is based on the object of providing an aircraft fuselage of CRP construction which has a sufficient inherent rigidity, so that it is possible to substantially dispense with or at least reduce the number of additional frame elements for bracing the aircraft fuselage.

According to the invention, this object is achieved by an aircraft fuselage having the features according to Claim 1 and by an aircraft or spacecraft having an aircraft fuselage according to Claim 13.

The prior art as described above leads to a conflict of objectives that cannot be resolved without the introduction of new technologies. This forms the basis of the invention. According to the invention, one possible improvement resides in integrating the function of the frame element, i.e. that of bracing the fuselage cross section, into the fuselage wall itself and thereby eliminating the frame element, the function of which has been obviated, in the design.

The intended technical effect of the invention consists in overcoming the drawbacks and limitations of current known fuselage designs and allowing higher-performance - but at the same time simpler, more lightweight and less expensive - technical solutions and ultimately superior products.

Therefore, a first aspect of the present invention relates to an aircraft fuselage comprising shell elements or fuselage barrels, wherein the shell elements or fuselage barrels are of CRP sandwich construction, which imparts sufficient inherent rigidity to the aircraft fuselage, so that it is possible to substantially eliminate the need for additional frame elements for bracing the aircraft fuselage. The CRP sandwich construction of the shell element or fuselage barrel is formed by an outer skin and an inner skin, between which is arranged a composite core element. Furthermore, the outer skin and inner skin consist partially or completely of a CRP material or are produced in a CRP construction.

The bracing of the fuselage wall which is known from the prior art is replaced, according to the invention, by an inherently rigid structure or continuous support by means of the composite core element that is arranged between the two CRP panelling sections or skins. The composite core element can preferably be ventilated and thereby precludes the accumulation of water in its interior.

According to one embodiment of the invention, the composite core element comprises, for example, a honeycomb structure and/or another suitable reinforcing structure, which is composed, for example, of panels and/or profiled sections. According to the invention, there are numerous conceivable designs of reinforcing structures. The crucial factor is that the shell elements and the fuselage structure formed therefrom has a sufficient inherent rigidity to allow frame elements for bracing the fuselage structure to be eliminated or at least reduced in number. There are numerous conceivable materials for the composite core element. These include, for example, organic materials, plastic foams, fibre-reinforced plastics, wax or Nomex paper and/or metal or metal alloys. Examples of possible metals or corresponding metal alloys include titanium, steel and/or aluminium.

By way of example, the abovementioned panels or profiled sections may be made from metal or a metal alloy. In principle, it is also possible to use combinations of materials in the composite core element.

In a further embodiment of the invention, the outer skin and/or inner skin may consist of a laminate. These laminates may include one or more layers of CRP material and may optionally be provided with at least one additional layer, for example of a GRP material and/or an ARP material. Such layers of a GRP or ARP material have the advantage that they can be used as a separating layer between the CRP fuselage and the metal frame in order to prevent the occurrence of contact corrosion or galvanic corrosion caused by a CRP/metal pairing.

The physical principle on which the invention is based is of very high structural mechanic efficiency and permits long fuselage lengths without further support. For this reason, there is no need for frame elements.

Nevertheless, frame elements are required at positions in the fuselage at which high loads and forces have to be introduced into the fuselage. These components, which form part of the framework, are made from metal or a metal alloy and form a part of the Faraday cage. By contrast, if components of this type were made from a CRP material, they could not act as a Faraday cage.

The components of the framework of the aircraft fuselage according to the invention include, for example, the frame elements for the nose section and the wing connection for the front and rear spars, the frame element for the landing gear compartment (rear end (bulkhead)) and the frame element for the rear fuselage end. In addition to frame elements, it is also possible to use cross-bars for the passenger and freight floor with connection to the shell joints in the longitudinal direction. In addition to the frame elements and cross-bars, a metallic fabric or mesh is additionally provided on the surface of the fuselage. The metallic mesh has the advantage of effectively protecting an aircraft from lightning strikes. The metal framework in this case additionally has the function of acting as a Faraday cage.

Furthermore, the framework described above has a minimum number of components, in particular frame elements, which are required as force-introducing elements. The metal framework has the advantage of allowing considerable weight to be saved, since there is no need for additional frame elements for bracing the fuselage, as the fuselage structure itself is formed with sufficient inherent rigidity.

In principle, however, according to the particular design, it is possible to add further metal frame elements and/or metal parts. This statement relates to the floors being attached to the fuselage side wall independently of frame elements in the region of electrically conductive shell connectors. In this context, the use of stringers in addition to the frame elements is also not ruled out. The stringers may, for example, likewise be made from metal or a metal alloy. The inherently rigid fuselage wall is preferably of thermally insulating design, such that condensation of water in the fuselage interior is substantially prevented. This is achieved, for example, by the two-part design of the fuselage wall, comprising outer skin and inner skin with a composite core element in between. This has a sufficient thermally insulating effect to substantially prevent condensation of water in the interior of the fuselage. This greatly reduces the risk of galvanic corrosion. The anti-corrosion measures can in this way be made more lightweight and less expensive.

In one embodiment of the invention, the sandwich structure of the shell element or the fuselage barrel is dimensioned in such a manner, in terms of the structure and thickness of the composite core element and the thickness of the outer skin and inner skin and the use of the material, that it forms a sufficient thermal insulation. As a result of the additional thermal insulation function of the shell elements or fuselage barrels of the aircraft fuselage it is possible, as described, to prevent the formation of water of condensation in the interior of the aircraft fuselage, thereby counteracting galvanic corrosion. This is highly important in the case of a CRP/metal hybrid construction, as in the present case.

Further aspects of the invention relate to an aircraft or spacecraft having an aircraft fuselage according to the invention.

The invention is explained in more detail below on the basis of exemplary embodiments and with reference to the accompanying figures, in which:
- Fig. 1a: shows a perspective view of an aircraft fuselage according to the invention, in which the framework of the aircraft fuselage is illustrated without the outer panelling;
- Fig. 1b: shows the framework from Fig. 1a with the outer panelling illustrated schematically, and
- Fig. 2: shows a schematic front view of the framework of the aircraft fuselage according to the invention as shown in Fig. 1b.

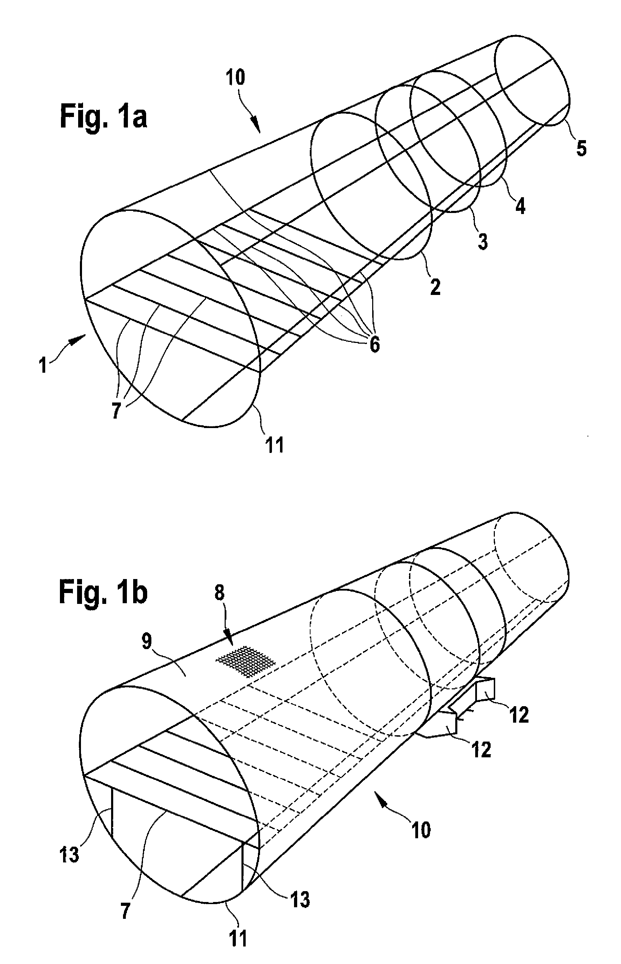

Fig. 1a diagrammatically depicts an aircraft fuselage 10 according to the invention. This figure first of all illustrates the framework 1 of the aircraft fuselage 10 without outer panelling 9. The framework 1 extends, for example, from a rear fuselage end to the beginning of the nose section.

The framework 1 has a frame element 11 for the nose section, a frame element 2 for the wing connection of the front spar (CWB front load-intro frame), and a frame element 3 for the wing connection of the rear spar (CWB rear load-intro frame). Furthermore, there is a frame element 4 for the rear end (bulkhead) of the landing gear compartment (MLG rear bulkhead frame), as well as a frame element 5 for the rear fuselage end (frame rear pressure dome). The framework 1 also has a plurality of cross-bars 7 of the passenger floor (pax floor cross beams) with a connection to shell joints 6 in the longitudinal direction (longitudinal panel joints). The illustration of the cross-bars 7 as shown in Fig. 1 is given purely by way of example and in greatly simplified form. The number of cross-bars 7 used depends, for example, on the intended purpose and type of aircraft and may, for example, extend substantially over the entire fuselage portion. Furthermore, cross-bars 7 of this type can also be provided for the freight floor, as shown in Fig. 1b below.

The framework 1 of the aircraft fuselage 10 according to the invention as illustrated in Fig. 1 substantially has a minimum of framework parts or elements required for example as force-introducing elements, including the frame elements, and/or used to form a Faraday cage. According to the present exemplary embodiment, the discrete stiffening of the fuselage wall which is known from the prior art is replaced by continuous support by means of composite core elements made from organic materials between two CRP skins. The physical principle has a high structural mechanical efficiency, so that long fuselage lengths make do without further support or with only a few additional supports. The inherently rigid structure of the fuselage and/or shell elements makes it possible to dispense with frame elements. Nevertheless, frame elements 2, 3, 4, 5, as mentioned above, are still required at the positions at which high loads and/or forces have to be introduced into the fuselage.

As has already been stated above, depending on the design, it is possible to add further metal frame elements and other metal elements, such as for example cross-bars or also longitudinal bars and stringers, etc. The metal frame elements 2, 3, 4, 5 and/or other metal elements 6, 7, 8 used to construct the framework 1 have the advantage that the fuselage can be formed as a type of Faraday cage even if the panelling is made from a CRP material. In this way, the required shielding against electromagnetic interference and the preconditions for the installation of electrical systems for example in the fuselage can be achieved.

By contrast, if the frame elements 2, 3 were made from a CRP material as well, additional metal elements would have to be provided in order to achieve the above-described shielding. However, this would represent additional weight, which would offset the weight saving resulting from the use of CRP materials.

In Fig. 1b, the framework 1 from Fig. 1a has schematically been provided with the outer panelling 9 and with a metallic mesh or fabric 8 (metal mesh). The metallic mesh 8 is indicated in Fig. 1b and extends substantially over the entire outer surface of the fuselage. The metallic mesh has a weight of, for example, 140 g/m². As has been described above, this metallic mesh serves in particular to protect against lightening strikes. Furthermore, the illustration presented in Fig. 1b also shows the frame elements 2 and 3 with their respective wing connections 12 for the front and rear spars.

The aircraft fuselage according to the invention, by virtue of the CRP construction, has a certain inherent rigidity, i.e. the fuselage is not, for example, "flattened" when it bends.

To achieve a CRP fuselage structure with the required inherent rigidity, the fuselage structure has, for example, a CRP sandwich construction. The CRP sandwich structure has the advantage that it can achieve a higher rigidity than components with a conventional, monolithic construction. In principle, however, the invention is not restricted to a CRP sandwich construction, but rather it is also possible to use other suitable CRP constructions with which shell elements of sufficient inherent rigidity can be produced.

The composite core elements used in the present case may, for example, include a commercially available honeycomb structure, although other suitable reinforcing structures or combinations thereof are fundamentally also possible, as has been explained above. The composite core element may also be produced from a multiplicity of materials and material combinations.

The present CRP/metal hybrid construction has the advantage that the core or the composite core element that is arranged between two CRP skins can be ventilated, thereby preventing water from building up in its interior. Furthermore, the two-shell design of the fuselage wall has a sufficient thermally insulating action to prevent the condensation of water in the interior of the fuselage. The risk of galvanic condensation can be drastically reduced as a result, so that the scope of protective measures required to prevent the occurrence of corrosion can be reduced.

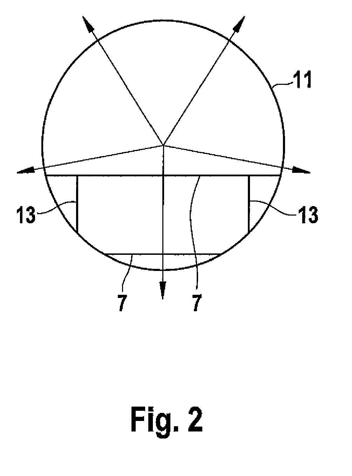

Fig. 2 shows a schematic front view of the framework of the aircraft fuselage according to the invention shown in Fig.1. As indicated by the arrows, by way of example five shell elements are attached to the framework 1, forming the circumference of the aircraft fuselage 10 and extending from the front nose section to the rear fuselage end. According to one exemplary embodiment of the invention, the aircraft fuselage may be composed of at least two shell elements or of three, four or more than five shell elements. Furthermore, it is possible to construct an inherently rigid fuselage structure not only using shell elements but also using fuselage barrels, which may be produced in accordance with the CRP sandwich construction described above or any other suitable CRP construction. The description of the figures with reference to the shell elements can in this case be correspondingly applied to the fuselage barrels.

Fig. 2 also illustrates, in front view, a cross-bar 7 of the passenger floor and a cross-bar 7 of the freight floor. The passenger floor may additionally be supported by bar elements or longitudinal bars 13, as is diagrammatically illustrated and indicated in Fig. 1b.

The invention is aimed at the development of future aircraft fuselages which on the one hand have a superior performance and on the other hand are less expensive to produce.

Although the present invention has been described above on the basis of preferred exemplary embodiments, it is not restricted to such embodiments, but rather can be modified within the scope as defined by the claims.

### List of reference numerals

- 1: Framework
- 2: Frame element for the wing connection of the front spar
- 3: Frame element for the wing connection of the rear spar
- 4: Frame element for the rear connection (bulkhead) of the landing gear compartment
- 5: Frame element to the rear fuselage end
- 6: Shell joints in the longitudinal direction
- 7: Cross-bar of the passenger and freight floor
- 8: Metallic mesh or fabric
- 9: Outer panelling
- 10: Fuselage of an aircraft or spacecraft
- 11: Frame element for a nose section
- 12: Wing connections
- 13: Bar element

## Claims

1. Inherently rigid fuselage (10) of an aircraft or spacecraft with fuselage elements of CRP construction, wherein the fuselage elements each have an outer skin and an inner skin, which are each at least partially formed from a CRP material, wherein a composite core element is provided between the outer skin and the inner skin,
**characterised in that** the fuselage elements form an inherently rigid structure bracing the fuselage cross section, and wherein the fuselage (10) in the interior has a metal framework (1) that is connected to the fuselage elements and which forms part of the Faraday cage.

2. Fuselage according to Claim 1, **characterized in that** the composite core element has a honeycomb structure and/or another suitable reinforcing structure, which is composed for example of panels and/or profiled sections.

3. Fuselage according to Claim 1 or 2, **characterized in that** the composite core element consists of or at least includes at least one organic material, a fibre-reinforced plastic, such as CRP, GRP or ARP, a plastic foam, wax paper, such as Nomex paper and/or metal or a metal alloy, such as an aluminium, steel and/or titanium alloy.

4. Fuselage according to at least one of the preceding claims, **characterized in that** the outer skin and/or inner skin consists of a laminate, wherein the laminate includes one or more layers of a CRP material and is additionally provided with at least one layer of a GRP material and/or an ARP material.

5. Fuselage according to at least one of the preceding claims, **characterized in that** the metal framework (1) includes components (2-8, 11, 13) made from metal and/or a corresponding metal alloy, wherein the metal or metal alloy is in the form, for example, of aluminium, steel and/or titanium.

6. Fuselage according to at least one of the preceding claims, **characterized in that** the framework (1) is designed in the form of a Faraday cage.

7. Fuselage according to at least one of the preceding claims, **characterized in that** the framework (1) includes, as components, frame elements (2, 3, 4, 11), stringers, cross-bars (7) and/or longitudinal bars (13).

8. Fuselage according to at least one of the preceding claims, **characterized in that** the framework (1) includes at least one frame element (11) for a nose section, a frame element (2) for a wing connection of a front spar, a frame element (3) for a wing connection of a rear spar, a frame element (4) for a rear connection of a landing gear compartment, a frame element (5) for a rear fuselage end, one or more cross-bars (7) of a passenger or freight floor and/or a connection (6) to at least one shell joint in the longitudinal direction.

9. Fuselage according to at least one of the preceding claims, **characterized in that** the sandwich structure of the fuselage element, which comprises the outer skin, the inner skin and the composite core element arranged between them, is dimensioned in terms of the structure and thickness of the composite core element and the thickness of the outer skin and inner skin and the use of the material that it forms a sufficient thermal insulation to at least reduce condensation of water in the interior of the fuselage (10).

10. Fuselage according to at least one of the preceding claims, **characterized in that** the fuselage (10) includes a metallic mesh (8) which covers at least part of the overall surface of the fuselage.

11. Fuselage according to at least one of the preceding claims, **characterized in that** the fuselage (10) is formed from two, three, four or five shell elements.

12. Fuselage according to at least one of the preceding claims, **characterized in that** the fuselage (10) is formed from a plurality of fuselage barrels which are integrated over the length.

13. Aircraft or spacecraft having a fuselage (10) according to one of the preceding claims.

## Patentansprüche

1. Inhärent starrer Rumpf (10) eines Flugzeugs oder Raumfahrzeugs mit Rumpfelementen von einer CRP-Konstruktion, wobei die Rumpfelemente jeweils eine Außenhaut und eine Innenhaut aufweisen, die jeweils mindestens teilweise aus einem CRP-Material bestehen, wobei sich ein Verbundkernelement zwischen der Außenhaut und der Innenhaut befindet,
**dadurch gekennzeichnet, dass** die Rumpfelemente eine inhärent starre Struktur bilden, die den Rumpfquerschnitt zusammenklammern, und wobei der Rumpf (10) im Inneren einen Metallrahmen (1) aufweisen, der mit den Rumpfelementen verbunden ist und der einen Teil des Faradayschen Käfigs bildet.

2. Rumpf nach Anspruch 1, **dadurch gekennzeichnet, dass** das Verbundkernelement eine Wabenstruktur und/oder eine sonstige geeignete Verstärkungsstruktur aufweist, die zum Beispiel aus Paneelen und/oder Profilen besteht.

3. Rumpf nach Anspruch 1 oder 2, **dadurch gekennzeichnet, dass** das Verbundkernelement aus mindestens einem von Folgendem besteht oder solches wenigstens enthält: organisches Material, ein faserverstärkter Kunststoff, wie zum Beispiel CRP, GRP oder ARP, ein Kunststoffschaum, Wachspapier, wie zum Beispiel Nomex-Papier, und/oder ein Metall oder eine Metalllegierung, wie zum Beispiel eine Aluminium-, Stahl- und/oder TitanLegierung.

4. Rumpf nach mindestens einem der vorangehenden Ansprüche, **dadurch gekennzeichnet, dass** die Außenhaut und/oder die Innenhaut aus einem Laminat besteht, wobei das Laminat eine oder mehrere Schichten eines CRP-Materials umfasst und zusätzlich mit mindestens einer Schicht eines GRP-Materials und/oder eines ARP-Materials versehen ist.

5. Rumpf nach mindestens einem der vorangehenden Ansprüche, **dadurch gekennzeichnet, dass** der Metallrahmen (1) Komponenten (2-8, 11, 13) umfasst, die aus Metall und/oder einer entsprechenden Metalllegierung bestehen, wobei das Metall oder die Metalllegierung beispielsweise in Form von Aluminium, Stahl und/oder Titan vorliegt.

6. Rumpf nach mindestens einem der vorangehenden Ansprüche, **dadurch gekennzeichnet, dass** der Rahmen (1) in Form eines Faradayschen Käfigs ausgebildet ist.

7. Rumpf nach mindestens einem der vorangehenden Ansprüche, **dadurch gekennzeichnet, dass** der Rahmen (1), als Komponenten, Rahmenelemente (2, 3, 4, 11), Längsversteifungen, Querstege (7) und/oder Längsstege (13) umfasst.

8. Rumpf nach mindestens einem der vorangehenden Ansprüche, **dadurch gekennzeichnet, dass** der Rahmen (1) mindestens eines von Folgendem umfasst: ein Rahmenelement (11) für einen Nasenteil, ein Rahmenelement (2) für eine Tragflügelverbindung eines vorderen Holms, ein Rahmenelement (3) für eine Tragflügelverbindung eines hinteren Holms, ein Rahmenelement (4) für eine hintere Verbindung eines Fahrwerkraums, ein Rahmenelement (5) für ein hinteres Rumpfende, einen oder mehrere Querstege (7) eines Passagier- oder Frachtbodens und/oder eine Verbindung (6) zu mindestens einer Schalenverbindung in der Längsrichtung.

9. Rumpf nach mindestens einem der vorangehenden Ansprüche, **dadurch gekennzeichnet, dass** die Sandwich-Struktur des Rumpfelements, welche die Außenhaut, die Innenhaut und das Verbundkernelement dazwischen umfasst, im Hinblick auf die Struktur und Dicke des Verbundkernelements und die Dicke der Außenhaut und der Innenhaut und die Verwendung des Material so bemessen ist, dass sie eine hinreichende Wärmedämmung bildet, um die Kondensation von Wasser im Inneren des Rumpfes (10) mindestens zu reduzieren.

10. Rumpf nach mindestens einem der vorangehenden Ansprüche, **dadurch gekennzeichnet, dass** der Rumpf (10) ein metallisches Netz (8) umfasst, das die Gesamtoberfläche des Rumpfes mindestens teilweise bedeckt.

11. Rumpf nach mindestens einem der vorangehenden Ansprüche, **dadurch gekennzeichnet, dass** der Rumpf (10) aus zwei, drei, vier oder fünf Schalenelementen besteht.

12. Rumpf nach mindestens einem der vorangehenden Ansprüche, **dadurch gekennzeichnet, dass** der Rumpf (10) aus mehreren Rumpfröhrensegmenten besteht, die entlang ihrer Länge integriert sind.

13. Flugzeug oder Raumfahrzeug, das einen Rumpf (10) nach einem der vorangehenden Ansprüche aufweist.

## Revendications

1. Fuselage à rigidité inhérente (10) d'aéronef ou de véhicule spatial comprenant des éléments de fuselage fabriqués à partir de PRFC, dans lequel les éléments de fuselage ont chacun une peau externe et une peau interne, chacune étant formée au moins partiellement d'un matériau PRFC, dans lequel un élément noyau composite est prévue entre les peaux interne et externe, **caractérisé par le fait que** les éléments de fuselage forment une structure à rigidité inhérente renforçant la section transversale du fuselage, et dans lequel le fuselage comprend à l'intérieur une ossature métallique (1) qui est raccordée aux éléments de fuselage et qui forme une partie de la cage de Faraday.

2. Fuselage selon la revendication 1, **caractérisé par le fait que** l'élément noyau composite présente une structure alvéolaire et/ou toute autre structure de renforcement adaptée, qui est composée par exemple de panneaux et/ou de sections profilées.

3. Fuselage selon la revendication 1 ou 2, **caractérisé par le fait que** l'élément noyau composite est constitué de ou contient au moins un matériau organique, un plastique renforcé par fibres, tel qu'un PRFC, un plastique renforcé par fibres de verre ou un matériau plastique renforcé par fibres d'aramide, une mousse plastique, du papier paraffiné, tel que du papier Nomex et/ou un alliage métallique, tel qu'un alliage d'aluminium, d'acier et/ou de titane.

4. Fuselage selon au moins l'une des revendications précédentes, **caractérisé par le fait que** la peau externe et/ou la peau interne est constituée d'un stratifié, dans lequel le stratifié contient une ou plusieurs couches de matériau PRFC et est en outre pourvu d'au moins une couche de matériau plastique renforcé par fibres de verre et/ou un matériau plastique renforcé par fibres d'aramide.

5. Fuselage selon au moins l'une des revendications précédentes, **caractérisé par le fait que** l'ossature métallique (1) contient des composants (2-8 , 11, 13) constitués de métal et/ou d'un alliage métallique correspondant, dans lequel le métal ou l'alliage métallique se présente sous la forme, par exemple, d'aluminium, d'acier et/ou de titane.

6. Fuselage selon au moins l'une des revendications précédentes, **caractérisé par le fait que** l'ossature (1) est conçue sous la forme d'une cage de Faraday.

7. Fuselage selon au moins l'une des revendications précédentes, **caractérisé par le fait que** l'ossature (1) contient, en tant que composants, des éléments de châssis (2, 3, 4, 11), des longerons, des traverses (7) et/ou des barres longitudinales (13).

8. Fuselage selon au moins l'une des revendications précédentes, **caractérisé par le fait que** l'ossature (1) contient au moins un élément de châssis (11) pour une section de nez, un élément de châssis (2) pour un raccordement d'aile d'un longeron avant, un élément de châssis (3) pour un raccordement d'aile d'un longeron arrière, un élément de châssis (4) pour un raccordement arrière d'un logement du train d'atterrissage, un élément de châssis (5) pour une extrémité de fuselage arrière, une ou plusieurs traverses (7) d'un plancher passager ou fret et/ou une liaison (6) avec au moins une jointure d'enveloppe dans la direction longitudinale.

9. Fuselage selon au moins l'une des revendications précédentes, **caractérisé par le fait que** la structure en sandwich de l'élément de fuselage, qui comprend la peau externe, la peau interne et l'élément noyau composite disposé entre elles, est dimensionnée en termes de structure et d'épaisseur de l'élément noyau composite et d'épaisseur de la peau externe et de la peau interne et d'utilisation du matériau de telle manière qu'elle forme une isolation thermique suffisante pour au moins réduire la condensation d'eau à l'intérieur du fuselage (10).

10. Fuselage selon au moins l'une des revendications précédentes, **caractérisé par le fait que** le fuselage (10) contient un treillis métallique (8) qui couvre au moins une partie de la surface globale du fuselage.

11. Fuselage selon au moins l'une des revendications précédentes, **caractérisé par le fait que** le fuselage (10) est formé de deux, trois, quatre ou cinq éléments d'enveloppe.

12. Fuselage selon au moins l'une des revendications précédentes, **caractérisé par le fait que** le fuselage (10) est constitué d'une pluralité de barils de fuselage qui sont intégrés sur la longueur.

13. Aéronef ou véhicule spatial ayant un fuselage (10) selon l'une des revendications précédentes.
